# EUROPEAN PATENT SPECIFICATION

(11) **EP 3 110 629 B1**
(45) Date of publication and mention of the grant of the patent: **18.04.2018**
(21) Application number: 15708762.8
(22) Date of filing: 24.02.2015
(51) Int. Cl.: B60B 33/00

(54) **CASTOR WHEEL DEVICE FOR FURNITURE AND THE LIKE**
LAUFROLLE-EINHEIT FÜR MÖBEL UND DERGLEICHEN
DISPOSITIF DE ROULETTE POUR MEUBLE ET AUTRE

(30) Priority: 27.02.2014 IT VI20140046
(43) Date of publication of application: 04.01.2017
(73) Proprietor: G-Lab Di Fuga Mariagrazia, 36028 Rossano Veneto (Vicenza) (IT)
(72) Inventor: BETTELLO, Pietro Romolo Vito, 36100 Vicenza (IT)
(74) Representative: Bettello, Pietro
(86) International application number: PCT/EP2015/053796
(87) International publication number: WO 2015/128312

(56) References cited:
- EP-A1- 0 413 197
- DE-A1- 10 358 920
- DE-A1-102005 020 438
- US-B1- 6 223 864

## Description

The present finding concerns a castor wheel device for furniture and the like, according to the general part of claim 1.

It is known that many furniture items such as tables, shelves, trolleys, armchairs, as well as other heavy devices such as trolleys, shelving units, foldable ladders and the like are provided with wheels, arranged at the base of the device, which are intended to both support the device, and guarantee the movement of such a device by rotation of the same wheel around its axis. In practice, the presence of said wheels (indeed, generally not only one wheel is foreseen, but rather a plurality of wheels) makes it possible to avoid having to move the device by lifting it and its subsequent translation (which is in any case quite difficult and sometimes even impossible to carry out in relation to the weight of the device to be transported) and, alternatively, to avoid dragging the device on the ground below it, which can lead to damaging of the surface on which it is dragged, and of the base of said device, as well as of the devices which support it (for example feet and the like). Sometimes, again in relation to the weight of the device to be moved, the dragging manoeuvre is virtually impossible, due to the friction that is generated between the device and the surface below.

The presence of the wheels makes it possible to avoid these drawbacks; very often said wheels are of the type that foresee that their rotation pin is anchored to a supporting structure, which in turn has the possibility of rotating around an axis that is perpendicular to the rolling plane of the wheel (in such a case we talk about pivoting wheel). In such a way the user has a certain amount of freedom in directing the device during the rotation of the wheels, since the pivoting device makes it possible to avoid dragging of the wheels in the case in which the forward direction of the wheels themselves is changed.

Very often such wheels also have means that are suitable for braking the wheel through reciprocal friction between the means and the wheel itself, based upon particular necessities of the user of the device to which the wheel is connected.

Such wheels are very widespread and, in this technical field, the following prior art documents can be mentioned: US 8,365,354 B1, US 2011/0247903 A1, US 2012/0317752 A1, WO 2012/171816 A1, EP 0800934 A2, WO 2012/035213 A1, WO 2007/074221 A1, US 2008/0276427 A1, WO 2009/038210 A1, DE 10 2010 051 093 A1, DE 20 2006 009 276 U1, EP 0 413 197 A1, DE 103 58 920 A1, US 6 223 864 B1 and finally DE 10 2005 020438 A1.

All the devices described in such documents propose to solve the problem of making a wheel of the aforementioned type, which is provided with braking means, which are strong, and simple in terms of construction and functionality and in which the braking exerted by the braking means is particularly effective. However, in all these devices the user must necessarily manually activate the braking means when it is desired for it to carry out its function and, conversely, he must obviously release such braking means when vice versa he desires to be able to easily move the device to which the wheel is applied. Generally, the user must bend over or kneel and manually act on an element that acts on the braking means that are often arranged in a position that is difficult to reach for the user, in particular when the wheels are applied on furniture; indeed although it would be theoretically possible to have transmission means of the commands of the braking means, with wires and the like so as to make such commands readily available to the user, it is clear that this would lead to unacceptable complications in terms of the structure, in addition to problems in terms of its appearance, as well as to a considerable increase in the production costs of the device, which is what causes such a possibility to always be rejected.

The purpose of the present finding is to provide a castor wheel device of the type mentioned above, which has braking means of the type also mentioned above, in which the braking action is in some way automatic i.e., it occurs when on the furniture or the like no thrust action is exerted; *vice versa* the braking action must stop, until it substantially automatically reaches zero, when a thrust action is exerted in the desired direction of the device to which the wheel is applied.

The device according to the finding must moreover be simple in terms of its construction, so as to have a production cost that can be compared to similar devices of the known type.

Finally, the device according to the finding must not have complications in terms of functionality, i.e., its use must be so as to say "automatic" and that is the braking action must occur and/or stop "automatically" when the device stops and when the device is pushed forwards in the desired direction.

This is obtained, according to the finding, by providing that the rotation pin of the wheel is inserted in a pair of holes obtained in the support structure of the wheel, said hole having a non-circular shape, foreseeing two edges that are substantially straight, which are joined together by two curved sections. The main axis of this hole is inclined by an angle other than 90° with respect to the rolling plane of the wheel, which is perpendicular to the pivoting axis and parallel to the rotation axis.

Thanks to this configuration it is foreseen that, in static conditions, the braking means exert their function, being it moreover foreseen that, when a thrust action is exerted on the device on which the wheel is applied, there is automatically the reciprocal disengagement between the wheel and the braking means, that therefore no longer exerts its function.

Vice versa, once the thrust action is finished, the rotation axis of the wheel returns to its original position, at which the braking means return in contact with the wheel.

These and other characteristics of the finding shall now be described in greater detail in the rest of the description, with reference to two particular embodiments thereof, given as a non-limiting example, with the help of the attached drawing tables, in which:
- figures 1-3 illustrate three views of the device according to the finding, in one first embodiment thereof;
- figures 4-6 illustrate the support structure of the wheel according to the finding, in this first embodiment;
- figure 7 illustrates a side view, which is sectioned according to a plane that is perpendicular to the rotation axis of the wheel, of the device according to the finding, in this first embodiment, in the condition in which the braking action is not exerted;
- figures 8 and 9 represent the device according to the finding in this last condition;
- figures 10-12 represent views corresponding to figures 7-9, respectively, of the wheel according to the finding, in this first embodiment, in the conditions in which the braking action is exerted;
- figures 13-16 represent wheels having a different diameter in conditions in which the braking action is present and in which it is not present;

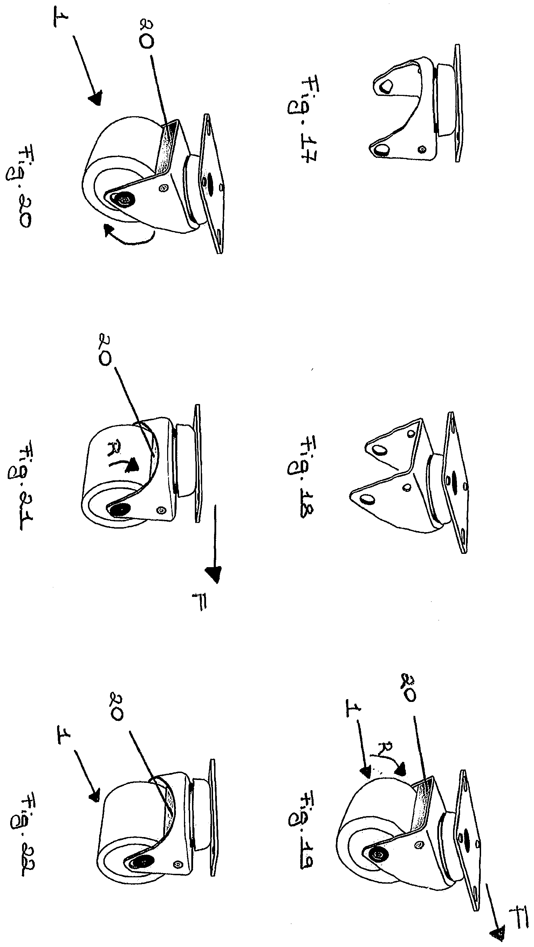

- figures 17-18 illustrate due views of the support device present in this first embodiment;
- figures 19 and 21, as well as 20 and 22, respectively, represent two of the wheels according to the finding shown, respectively, in conditions in which there is the braking action and in which there is not the braking action;
- figures 23-25 illustrate three views of the device according to the finding, in a second embodiment thereof;
- figures 27-28 illustrate the support structure of the wheel according to the finding, in this second embodiment;
- figure 29 illustrates a side view, which is sectioned according to a plane that is perpendicular to the rotation axis of the wheel, of the device according to the finding, in this second embodiment, in the condition in which the braking action is not exerted;
- figures 30 and 31 represent the device according to the finding in this condition;
- figures 32-34 represent views corresponding to figures 29-31, respectively, of the wheel according to the finding in this second embodiment, in the conditions in which the braking action is exerted;
- figures 35-38 represent wheels having a different diameter in conditions in which there is the braking action and in which there is not the braking action;
- figures 39-40 illustrate two views of the support device present in this second embodiment;
- figures 41 and 43, as well as 42 and 44, respectively, represent two of the wheels according to the finding shown in the conditions in which the braking action is present and in which it is not present, respectively.

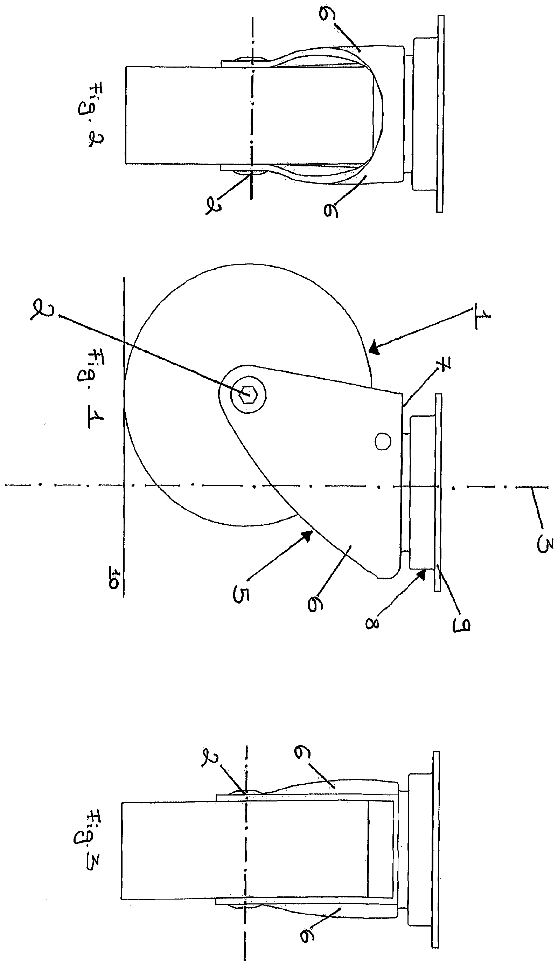

As visible in figures 1 to 3, the device according to the finding, in a first embodiment thereof, foresees that the wheel 1 is hinged at 2 to a support structure 5, comprising a pair of side walls 6, which are beside the wheel starting from the rotation pin 2 and that are joined to one another by a covering plate 7.

From this covering plate a pivoting device rises, indicated with reference numeral 8, in which there is a pin 9, which has the possibility of rotating around the vertical axis 3, which is perpendicular to the surface 10 on which the wheel rolls.

The pin 9 is then fixed, in per se known ways, to the lower surface of the furniture or in any case of the device to the lower surface of which the wheel is fixed. In such a way, as previously explained, the user has both the possibility of making the device move by rolling it, and the possibility of directing the wheel itself in the desired direction, thanks to the possibility of the aforementioned wheel of pivoting around the axis 3.

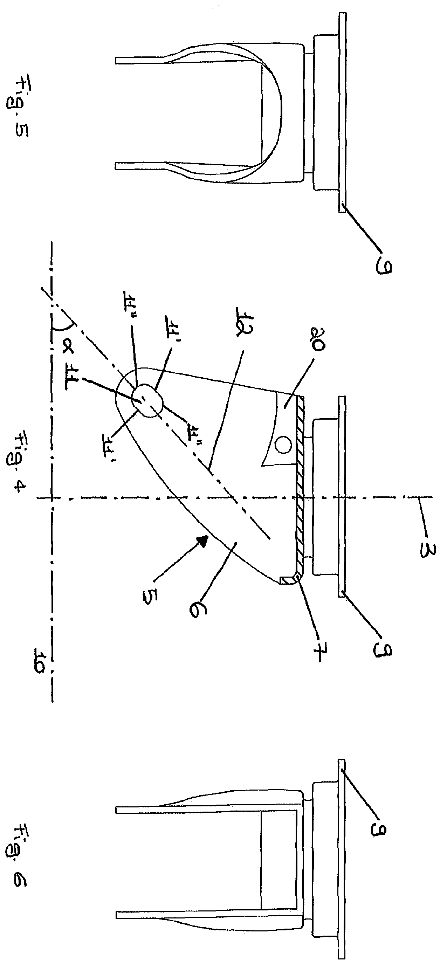

Figures 4 to 6 illustrate only the support structure 5, without the wheel, so as to better highlight the various elements that make up said structure. In particular, in figure 4 it is possible to see that in the support structure there is a skid 20, which is made with a material having high friction coefficient and that acts as braking means, suitable for acting on the rolling surface of the wheel, like in the case of similar devices of the known type.

In figure 4 it can be noted, however, that the rotation pin 2 of the wheel, which is visible in figures 1 to 3, is inserted in a hole 11 obtained on both sides 6, which has a non-circular shape, having two sides 11', that are substantially straight, which are joined to one another by two curved sections 11"; the fundamental characteristic of this hole 11 consists of the fact that its main axis 12 is inclined by an angle "α" that is different than 90° with respect to the rolling plane 10 of the wheel, which is perpendicular to the pivoting axis 3 and is parallel to the rotation axis 2.

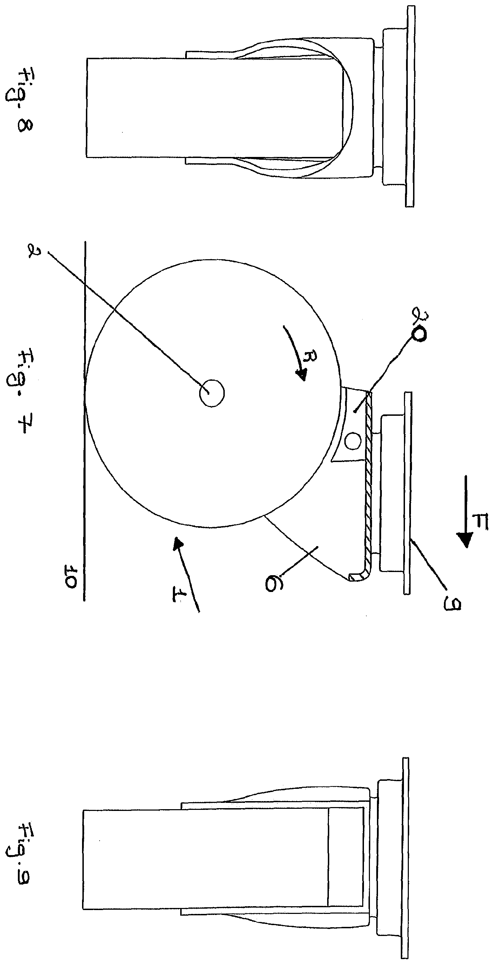

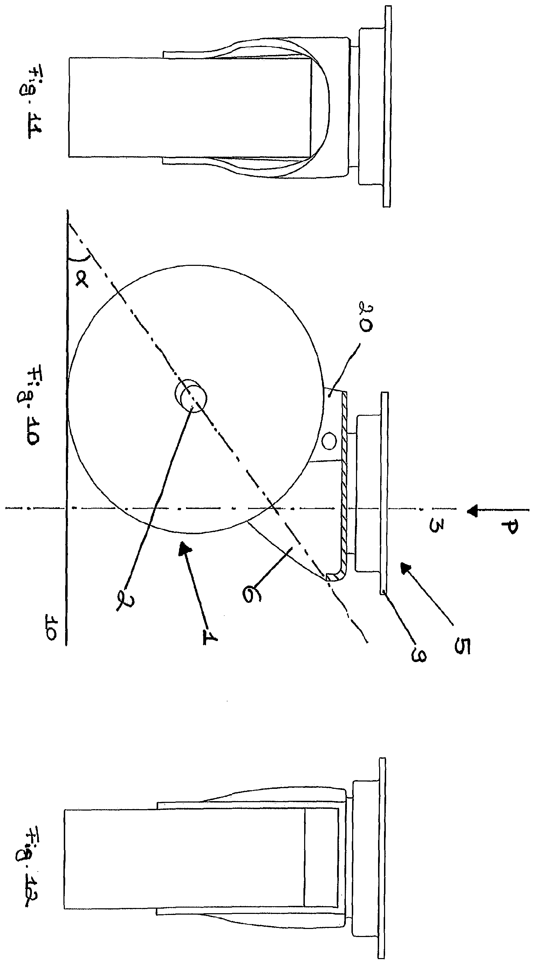

By observing figure 10, it can be noted that, in static conditions, thanks to the weight P of the element to which the wheel is fixed, which bears down on the support structure, the skid 20 is intended to come into contact with the rolling surface of the wheel 1 determining, in a so called "automatic" way, a braking action on the wheel itself; vice versa, by carefully observing figure 7, it can be seen that the skid 20, when the wheel 1 moves in the direction that is indicated by the arrow F, with a rotation indicated with the arrow R, there is the lifting, in a so-called "automatic" fashion of the skid 20 in relation to the rolling surface of the wheel 1, which causes the braking action to "automatically" finish.

Same conditions are found when comparing with one another figures, 19 and 20, as well as 21 and 22 in which, respectively, the wheel 1 is in conditions of movement and in conditions of rest, respectively.

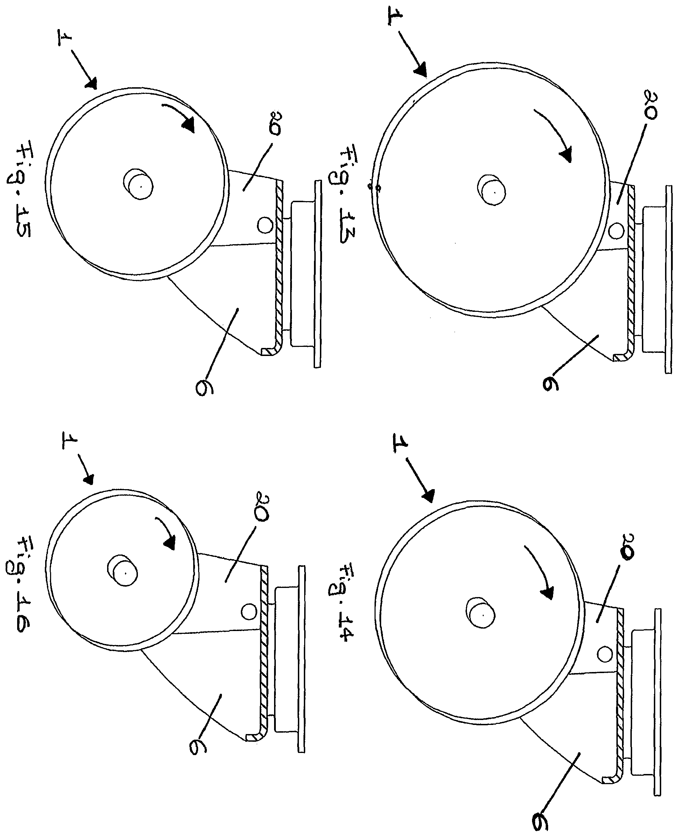

The same comparison can be made by carefully observing figures 13 to 16, which refer to wheels 1 having a different diameter, in which it can firstly be seen that, in a same support structure 6, wheels with a diameter even considerably different, can be housed, by simply adapting the dimensions of the skid 20.

Concerning this it is worth underlining also that if in the drawings it seems that it is the wheel 1 that modifies its position, according to whether it is resting or moving, it is actually the support structure 5 and hence the skid 20 that modify their position, so that the aforementioned skid does or does not come into contact with the rolling surface of the wheel 1.

The rotation directions indicated in the wheel clearly refer to the situation in which the surface of the wheel 1 is not in contact with the skid 20.

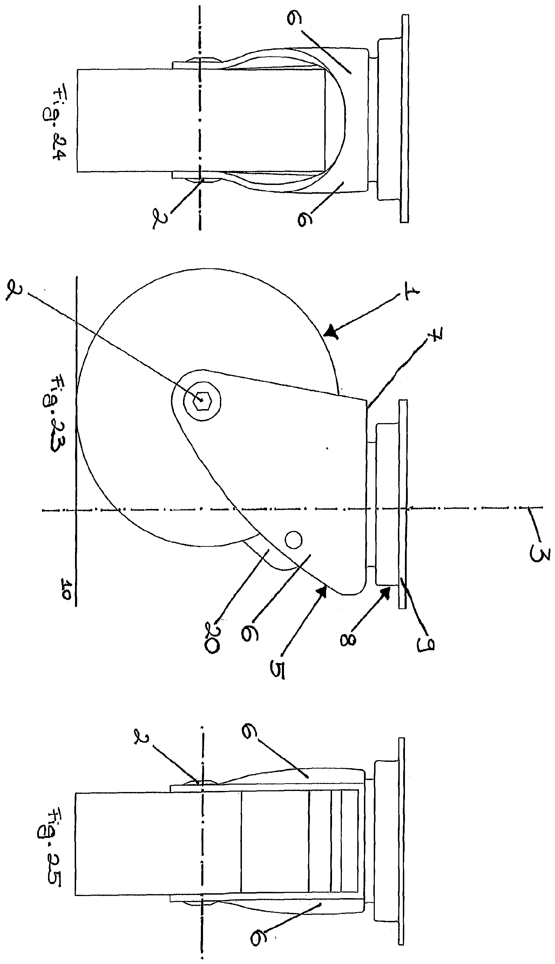

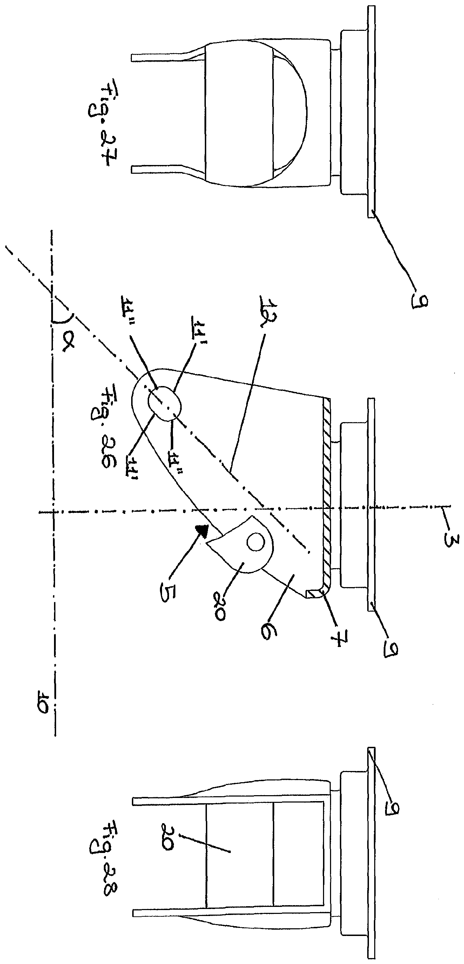

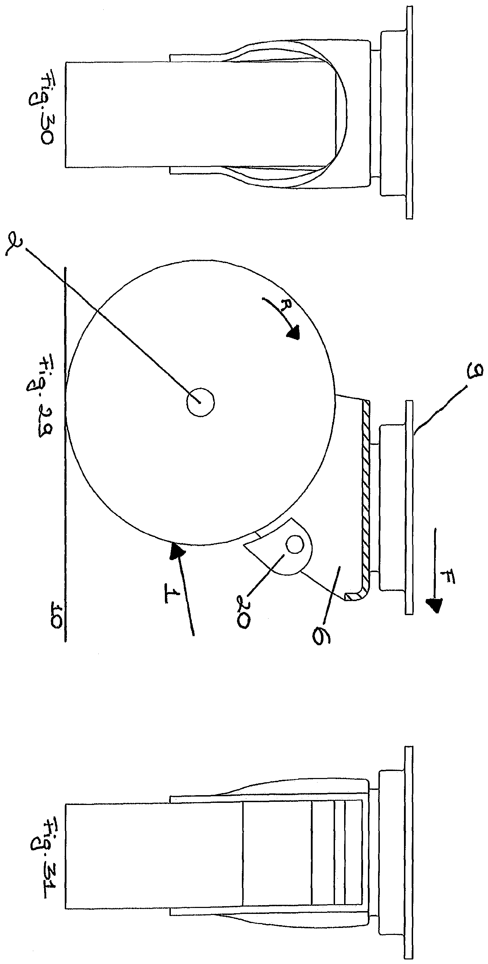

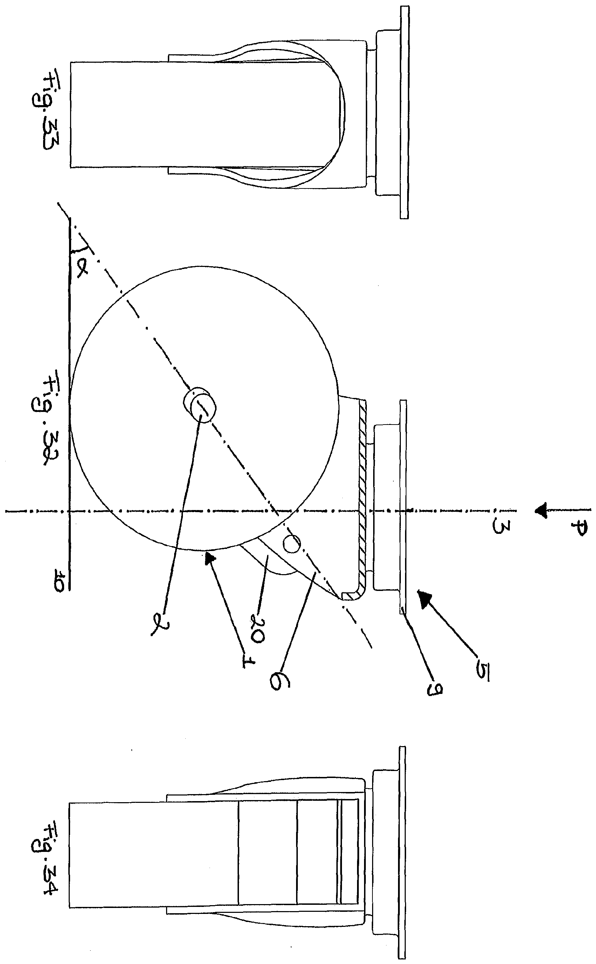

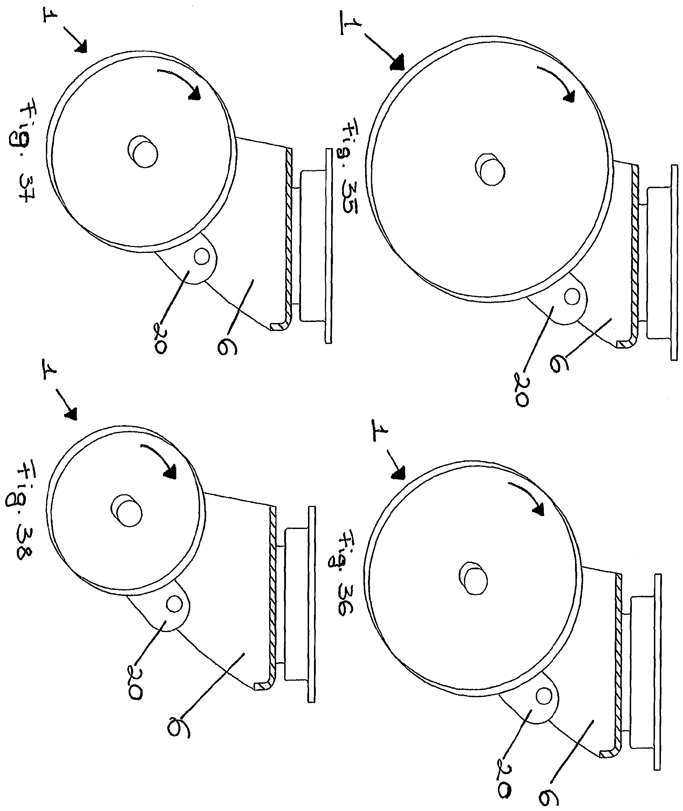

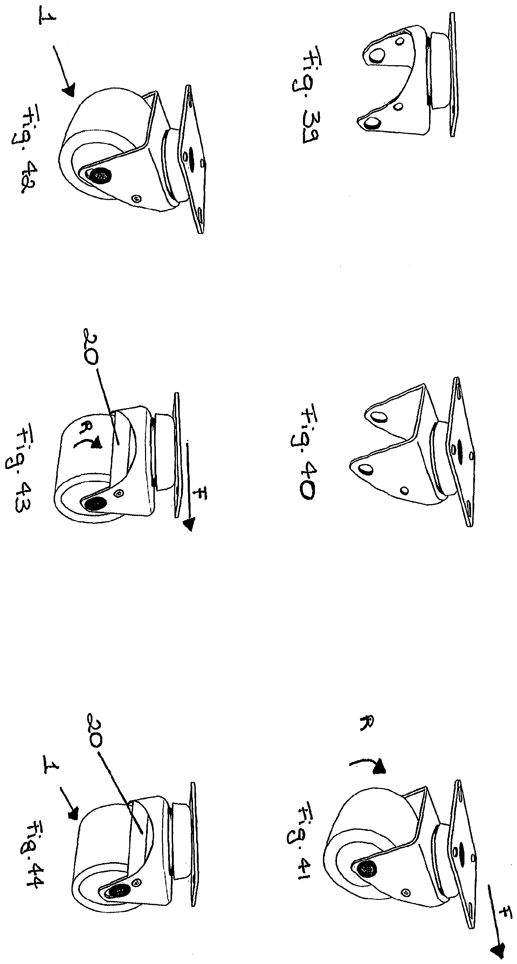

Figures 23 to 44 illustrate another possible embodiment of the wheel according to the finding, in which the support structure 5 has a shape that is substantially similar to the previous one, but in which the skid 20 takes up a configuration that is slightly different and, especially, it is positioned in a different position with respect to that in which the skid 20 is arranged in the first embodiment of the finding.

In practice in the first embodiment of the device according to the finding (see fig. 7) the skid is positioned before the pivoting axis 3, with reference to the rotation direction R of the wheel, which corresponds to the forward movement of the device to which the wheel is fixed; *vice versa* in the second embodiment of the device according to the finding (see fig. 24) the skid 20 is arranged after the pivoting axis 3, again with reference to the rotation direction of the wheel, which corresponds to the forward direction of the device to which the wheel is fixed.

In everything else the considerations made previously remain substantially unvaried.

From what has been described above it can be seen how with the device according to the finding it is possible to obtain the desired purposes, in that, with a particularly simple mechanical structure, it is possible to activate and stop the braking action, in an "automatic" manner, based upon the particular requirements of the user.

## Claims

1. CASTOR WHEEL DEVICE FOR FURNITURE AND THE LIKE, intended for supporting, alone or in connection with one or more similar wheels, the furniture and the like to which said device is connected as well as guaranteeing the movement of such furniture and the like, by rotation of a wheel, said wheel (1) being of the type providing that the rotational pin (2) thereof is anchored to a support structure (5) comprised in the castor wheel device, said support structure (5) being capable of pivoting around an axis (3) perpendicular to the surface (10) on which the wheel (1) rolls, braking means being comprised in the castor wheel device and adapted to brake the wheel (1) by mutual friction between said braking means and the same wheel (1), based on the particular needs of the user of the device to which the wheel is connected, whereby said pin (2) is inserted in a pair of holes (11) obtained in the support structure (5) of the wheel, each of said holes having a non circular shape, being provided with two substantially straight edges (11'), joined together by two curved sections (11"), forming a slot, **characterized in** the main axis (12) of each of said holes being inclined of an angle "α" other than 90° with respect to the rolling plane (10) of the wheel, which is perpendicular to the pivoting axis (3) and parallel to the rotational axis (2), it being provided that, under static conditions, the braking means will end up contacting the wheel (1), accomplishing its function, it being also provided that, when a thrust action is exerted on the furniture or the like to which the castor wheel device is applied, the rotational axis (2) of the wheel (1) is intended for moving within the slot, thus resulting in the wheel (1) and the braking means disengaging from one another, the braking means thus not exerting its function anymore, it being lastly provided that, once the thrust action is completed, the rotational axis of the wheel returns to its original position, at which the braking means will contact again the wheel (1).

2. CASTOR WHEEL DEVICE FOR FURNITURE AND THE LIKE, according to claim 1, **characterised in that** the means adapted to brake the wheel consists of a skid (20), made of a material having a high coefficient of friction, adapted to act on the rolling surface of the same wheel.

3. CASTOR WHEEL DEVICE FOR FURNITURE AND THE LIKE, according to claim 2, **characterised in that** the skid (20) is arranged before the pivoting axis (3), with reference to the rotational direction of the wheel (1), corresponding to the advancement of the device to which the wheel is fastened.

4. CASTOR WHEEL DEVICE FOR FURNITURE AND THE LIKE, according to claim 2, **characterised in that** the skid (20) is arranged after the pivoting axis (3), with reference to the rotational direction of the wheel (1) corresponding to the advancement of the device to which the wheel is fastened.

## Patentansprüche

1. LAUFRADVORRICHTUNG FÜR MÖBEL UND DERGLEICHEN, vorgesehen zum Stützen, allein oder zusammen mit einem oder mehreren ähnlichen Rädern, der Möbel und dergleichen, mit denen die Vorrichtung verbunden ist, sowie zum Sicherstellen der Bewegung solcher Möbel und dergleichen, durch Drehung eines Rades, wobei das Rad (1) des Typs ist, der bewirkt, dass der Drehbolzen (2) desselben an einer Trägerstruktur (5) verankert ist, die in der Laufradvorrichtung enthalten ist, wobei die Trägerstruktur (5) in der Lage ist, um eine Achse (3) zu schwenken, die senkrecht zu der Fläche (10) angeordnet ist, auf der das Rad (1) rollt, wobei Bremsmittel in der Laufradvorrichtung enthalten und dazu geeignet sind,
das Rad (1) durch gegenseitige Reibung zwischen den Bremsmitteln und dem Rad (1) zu bremsen, basierend auf den besonderen Anforderungen des Benutzers der Vorrichtung, mit der das Rad verbunden ist, wobei der Bolzen (2) in ein Paar von Bohrungen (11) eingefügt ist, die auf der Trägerstruktur (5) des Rades herausgearbeitet sind, wobei jede Bohrung eine nicht kreisförmige Form aufweist und mit zwei im Wesentlichen geraden Kanten (11') versehen ist, die durch zwei gekrümmte, einen Schlitz bildende Abschnitte (11") miteinander verbunden sind, **dadurch gekennzeichnet, dass** die Hauptachse (12) einer jeden Bohrung um einen von 90° verschiedenen Winkel "α" in Bezug auf die Rollebene (10) des Rades geneigt ist, die senkrecht zur der Schwenkachse (3) und parallel zur Drehachse (2) angeordnet ist, wobei es vorgesehen ist, dass die Bremsmittel im statischen Zustand letztendlich das Rad (1) berühren und ihre Funktion erfüllen, wobei es weiter vorgesehen ist, dass bei Ausüben einer Schubwirkung auf die Möbel und dergleichen, an denen die Laufradvorrichtung angebracht ist, die Drehachse (2) des Rades (1) zur Bewegung innerhalb des Schlitzes vorgesehen ist, wodurch das Rad (1) und die Bremsmittel sich voneinander lösen
und die Bremsmittel ihre Funktion nicht mehr ausüben, wobei letztlich vorgesehen ist, dass die Drehachse des Rades nach Vervollständigung der Schubwirkung in ihre ursprüngliche Stellung zurückkehrt, in der die Bremsmittel das Rad (1) wieder berühren.

2. LAUFRADVORRICHTUNG FÜR MÖBEL UND DERGLEICHEN,
nach Anspruch 1, **dadurch gekennzeichnet, dass** die Mittel, die dazu geeignet sind, das Rad zu bremsen, aus einer Kufe (20) bestehen, die aus einem Material mit hohem Reibungskoeffizient hergestellt ist, das dazu geeignet, auf die Lauffläche des Rades einzuwirken.

3. LAUFRADVORRICHTUNG FÜR MÖBEL UND DERGLEICHEN,
nach Anspruch 2, **dadurch gekennzeichnet, dass** die Kufe (20) vor der Schwenkachse (3) bezüglich der Drehrichtung des Rades (1) angeordnet ist, die dem Vorschub der Vorrichtung entspricht, an der das Rad befestigt ist.

4. LAUFRADVORRICHTUNG FÜR MÖBEL UND DERGLEICHEN,
nach Anspruch 2, **dadurch gekennzeichnet, dass** die Kufe (20) nach der Schwenkachse (3) bezüglich der Drehrichtung des Rades (3) angeordnet ist, die dem Vorschub der Vorrichtung entspricht, an der das Rad befestigt ist.

## Revendications

1. DISPOSITIF A ROUES PIVOTANTES POUR MEUBLES ET SIMILAIRES, destiné à supporter, seul ou en combinaison avec une ou plusieurs roues similaires, le meuble et similaire auquel ledit dispositif est connecté ainsi qu'à garantir le mouvement du meuble et similaire, par rotation d'une roue, ladite roue (1) étant du type prévoyant que la tige de rotation (2) de celle-ci soit ancré à une structure de support (5) comprise dans le dispositif à roues pivotantes, ladite structure de support (5) étant capable de pivoter autour d'un axe (3) perpendiculaire à la surface (10) sur laquelle la roue (1) roule, des moyens de freinage étant compris dans le dispositif à roues pivotantes et adaptés pour freiner la roue (1) par frottement mutuel entre lesdits moyens de freinage et la roue (1) elle-même, sur la base des exigences particulière de l'utilisateur du dispositif auquel la roue est connectée, moyennant quoi ladite tige (2) est insérée dans une paire de trous (11) ménagés dans la structure de support (5) de la roue, chacun desdits trous ayant une forme non circulaire, étant muni de deux bords sensiblement droits (11'), unis ensemble par deux sections incurvées (11"), formant une fente, **caractérisé en ce que** l'axe principal (12) de chacun desdits trous est incliné d'un angle « α » différent de 90° par rapport au plan de roulement (10) de la roue, qui est perpendiculaire à l'axe de pivotement (3) et parallèle à l'axe de rotation (2), étant prévu que, dans des conditions statiques, les moyens de freinage finissent en venant en contact avec la roue (1), en accomplissant leur fonction, étant également prévu que, quand une action de poussée est exercée sur le meuble et similaire auquel le dispositif à roues pivotantes est appliqué, l'axe de rotation (2) de la roue (1) soit destiné à se déplacer dans la fente, avec pour conséquence que la roue (1) et les moyens de freinage se désengagent l'un de l'autre, les moyens de freinage n'exerçant ainsi plus leurs fonction, étant enfin prévu que, une fois que l'action de poussée est terminée, l'axe de rotation de la roue retourne dans sa position d'origine, dans laquelle les moyens de freinage seront à nouveau en contact avec la roue (1).

2. DISPOSITIF A ROUES PIVOTANTES POUR MEUBLES ET SIMILAIRES, selon la revendication 1, **caractérisé en ce que** les moyens adaptés pour freiner la roue comprennent un patin (20), réalisé en un matériau ayant un coefficient de frottement élevé, adapté pour agir sur la surface de roulement de la roue elle-même.

3. DISPOSITIF A ROUES PIVOTANTES POUR MEUBLES ET SIMILAIRES, selon la revendication 2, **caractérisé en ce que** le patin (20) est agencé avant l'axe de pivotement (3), en référence à la direction de rotation de la roue (1), correspondant au déplacement en avant du dispositif auquel la roue est fixée.

4. DISPOSITIF A ROUES PIVOTANTES POUR MEUBLES ET SIMILAIRES, selon la revendication 2, **caractérisé en ce que** le patin (20) est agencé après l'axe de pivotement (3), en référence à la direction de rotation de la roue (3) correspondant au déplacement en avant du dispositif auquel la roue est fixée.
